# EUROPÄISCHE PATENTANMELDUNG

(11) **EP 3 296 056 A1**
(43) Veröffentlichungstag der Anmeldung: **21.03.2018**
(21) Anmeldenummer: 17191223.1
(22) Anmeldetag: 15.09.2017
(51) Int. Cl.: B23P 19/00, B25B 23/04

(54) **SCHRAUBVORRICHTUNG**

(30) Priorität: 19.09.2016 DE 102016117595
(71) Anmelder: Weinmann Holzbausystemtechnik GmbH, 72813 St. Johann (DE)
(72) Erfinder: Weinmann, Karl, 72813 St. Johann (DE)
(74) Vertreter: Kohler Schmid Möbus Patentanwälte

(57) **Zusammenfassung**

Eine Schraubvorrichtung zum automatischen Eindrehen von Schrauben (12) in eine Werkstückoberfläche mit einem automatischen Schraubwerkzeug (13) und einem Schraubenmagazin (11), in dem die Schrauben (12) an einem Träger (14) parallel zueinander aufgereiht bevorratet sind, und mit einer Schraubenvereinzelungsvorrichtung (16), mit der einzelne Schrauben (12) vom Träger (14) abtrennbar und über eine Schraubenzuführvorrichtung (17) dem Schraubwerkzeug (13) einzeln zuführbar sind, sodass das Schraubwerkzeug (13) die Schrauben (12) nacheinander in die Werkstückoberfläche an dafür vorgesehenen Stellen mit einem definierten Hub eindrehen kann.

## Beschreibung

Die Erfindung betrifft eine Schraubvorrichtung zum automatischen Eindrehen von Schrauben in eine Werkstückoberfläche mit einem automatischen Schraubwerkzeug und einem Schraubenmagazin, in dem die Schrauben an einem Träger parallel zueinander aufgereiht bevorratet sind.

Solche Schraubvorrichtungen sind bereits bekannt. Die Schrauben sind an einem bandförmigen Träger aus Papier oder Kunststoff befestigt und werden oberhalb der Werkstückoberfläche unter das Schraubwerkzeug geführt, das den Schraubenkopf erfasst und mit der Eindrehbewegung die Schraube vom Träger löst. Die Zuführvorrichtung für die Trägerbänder muss dabei zusammen mit dem Schraubwerkzeug über die Werkstückoberfläche zur jeweils nächsten Schraubstelle bewegt werden. Die zu bewegende Masse ist daher relativ hoch, wodurch die Schraubvorgänge nicht beliebig beschleunigt werden können. Zum Nachfüllen eines neuen Trägerbandes mit Schrauben müssen außerdem Schraubwerkzeug und Zuführvorrichtung zum Rand des Werkstücks bzw. der Bearbeitungsanlage gefahren werden, was zu Unterbrechungen der Bearbeitung führt. Ein weiterer Nachteil liegt darin, dass die Schrauben an dem Träger mit einem kleinen Abstand zur Werkstückoberfläche unter das Schraubwerkzeug geführt werden müssen, um nicht an der Werkstückoberfläche entlang zu schleifen. Dadurch ist jedoch kein definierter Hub durch das Schraubwerkzeug möglich. Es kann vorkommen, dass die Schraubenköpfe nach dem Eindrehen der Schraube in das Werkstück noch über die Werkstückoberfläche vorstehen oder zu weit in diese eingedrückt sind.

Der Erfindung liegt daher die Aufgabe zugrunde, eine Schraubvorrichtung bereitzustellen, die diese Probleme vermeidet und einwandfreie Schraubergebnisse und kurze Bearbeitungszeiten ermöglicht.

Diese Aufgabe wird gelöst durch eine Schraubvorrichtung zum automatischen Eindrehen von Schrauben in eine Werkstückoberfläche mit einem automatischen Schraubwerkzeug und einem Schraubenmagazin, in dem die Schrauben an einem Träger parallel zueinander aufgereiht bevorratet sind, die dadurch gekennzeichnet ist, dass sie eine Schraubenvereinzelungsvorrichtung aufweist, mit der einzelne Schrauben vom Träger abtrennbar und über eine Schraubenzuführvorrichtung dem Schraubwerkzeug einzeln zuführbar sind, sodass das Schraubwerkzeug die Schrauben nacheinander in die Werkstückoberfläche an dafür vorgesehenen Stellen mit einem definierten Hub eindrehen kann.

Die vereinzelten Schrauben können dem Schraubwerkzeug durch die Zuführvorrichtung sehr viel präziser zugeführt werden als die mit einem mit einer Vielzahl von Schrauben besetzten Träger möglich ist. Dadurch kann gewährleistet werden, dass bei einem fest eingestellten Hub des Schraubwerkzeugs alle Schraubverbindungen identisch und fehlerfrei ausgebildet sind, d. h. die Schraubenköpfe weder über die Werkstückoberfläche überstehen noch zu weit in diese eingedrückt sind. Durch die Trennung der Schraubenvereinzelung vom Eindrehen der Schrauben können das Magazin und die Schraubenvereinzelungsvorrichtung auch stationär angeordnet werden. Sie müssen nicht gemeinsam mit dem Schraubwerkzeug mitbewegt werden, sodass Letzteres sehr viel schneller von Schraubstelle zu Schraubstelle bewegt werden kann als bei bekannten Schraubvorrichtungen. Dies führt zu deutlichen Verkürzungen der Bearbeitungszeiten.

Bevorzugt können mit der Schraubenzuführvorrichtung die vereinzelten Schrauben mit der Spitze auf der Werkstückoberfläche aufsetzbar sein, bevor das Schraubwerkzeug am Kopf der Schraube eingreift und die Schraube eindreht. Auf diese Weise lassen sich äußerst präzise Platzierungen der Schrauben und optimale Eindrehergebnisse erzielen.

Die Schraubenzuführvorrichtung kann vorzugsweise ein Schlauch oder ein Rohr sein. Flexible Rohre oder Schläuche als Zuführvorrichtungen ermöglichen große Entfernungen zwischen der Vereinzelungsvorrichtung und dem Schraubwerkzeug. Dabei können
die Schrauben auch mittels Druckluft durch den Schlauch oder das Rohr bewegbar sein, was auch einen gekrümmten Verlauf des Rohres oder des Schlauchs gestattet.

Das Schraubenvereinzelungswerkzeug kann zweckmäßigerweise ein Stift sein, der durch Krafteinwirkung auf den Schraubenkopf in Schraubenlängsrichtung die Schrauben nacheinander vom Träger löst. Der Stift kann dabei an seinem freien Ende auch mit einer Zentrieröffnung für den Schraubenkopf versehen sein, um ein gezieltes Lösen der Schrauben und Übergeben an die Zuführvorrichtung zu gewährleisten.

Weiter kann an der Schraubvorrichtung eine Vorschubeinrichtung für den Träger vorgesehen sein, mit dem dieser getaktet jeweils um den gegenseitigen Abstand der Schrauben am Träger vorwärtsbewegbar ist, um die jeweils nächste Schraube in der
Schraubenvereinzelungsvorrichtung zu platzieren.

Der Träger kann in gewohnter Weise ein streifenförmiger Träger, vorzugsweise ein Papierstreifen, sein, an dem die Schrauben befestigt sind. Somit können herkömmliche Schraubenmagazine auch bei der erfindungsgemäßen Schraubvorrichtung Verwendung finden. Die Träger können jedoch auch als Scheibe ausgebildet sein, in der die Schrauben in Form einer Matrix hängend gehalten sind.

Ist der Träger streifenförmig ausgebildet, so kann er im Schraubenmagazin zickzackförmig oder spiralförmig aufgewickelt sein.

Weitere Vorteile ergeben sich, wenn das Schraubenmagazin austauschbar angeordnet ist. So kann es leicht gegen ein neues Magazin ausgetauscht werden. Dabei ist es vorteilhaft, wenn die Schraubvorrichtung nach Leerung eines Schraubenmagazins automatisch ein neues Schraubenmagazin lädt. Stillstandzeiten zum Nachfüllen von Schrauben können auf diese Weise minimiert werden.

Im Folgenden werden zwei Ausführungsbeispiele einer erfindungsgemäßen Schraubvorrichtung mit Bezug auf die Zeichnung näher erläutert.
- Fig. 1: eine perspektivische Ansicht einer ersten Schraubvorrichtung;
- Fig. 2: eine perspektivische Ansicht einer zweiten Schraubvorrichtung;

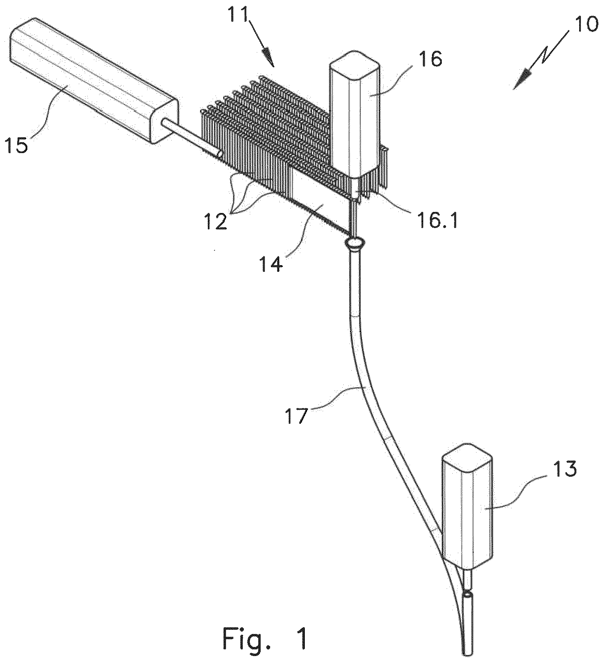

In Fig. 1 ist eine Schraubvorrichtung 10 gezeigt, die ein Magazin 11 für Schrauben 12 sowie ein Schraubwerkzeug 13 aufweist. Die Schrauben 12 sind an streifenförmigen Magazinbändern 14 angeordnet, wobei das Magazin 11 mehrere solcher parallel zueinander gestapelter Magazinbänder 14 beinhaltet. Es kann auch ein einziges, zickzackförmig gefaltetes Band 14 im Magazin enthalten sein.

Weiter ist eine Vorschubeinrichtung 15 vorgesehen, die das Magazinband 14 mit den Schrauben 12 zu einer Schraubenvereinzelungseinrichtung 16 befördert. Die Schraubenvereinzelungseinrichtung 16 weist einen nach unten bewegbaren Stift 16.1 auf, mit dessen Hilfe die Schrauben 12 vom Band 14 lösbar und an eine schlauchförmige Zuführvorrichtung 17 übergebbar sind. Die Zuführvorrichtung 17 wiederum befördert die Schrauben 12 zum Schraubwerkzeug 13, das die Schrauben dann in eine hier nicht gezeigte Werkstückoberfläche einschraubt.

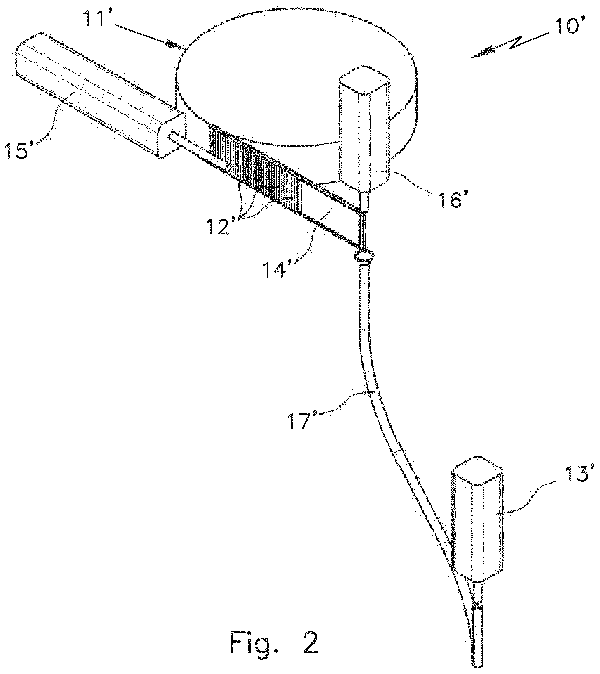

Die in Fig. 2 gezeigte Schraubeinrichtung 10' ist ähnlich aufgebaut wie die Schraubeinrichtung 10 aus Fig. 1. Der einzige Unterschied besteht in der Form des Magazins 11', die bei der Vorrichtung 10' rund ausgeführt ist Es kann ein spiralförmig aufgewickeltes Magazinband 14' für Schrauben 12' aufnehmen. Das Lösen der Schrauben 12' vom Band 14' mittels einer Schraubenvereinzelungseinrichtung 16', wobei eine Vorschubeinrichtung 15' die Schrauben zur Vereinzelungseinrichtung 16' befördert, entspricht dem Vereinzeln der Schrauben 12 bei der Vorrichtung 10. Auch bei der Vorrichtung 10' werden die vereinzelten Schrauben 12' über eine schlauchförmige Zuführvorrichtung 17' einem Schraubwerkzeug 13' zugeführt, sodass auch das Magazin 11' entfernt vom Schraubwerkzeug angeordnet werden kann und nicht mit dem Schraubwerkzeug 13' mitbewegt werden muss.

## Patentansprüche

1. Schraubvorrichtung zum automatischen Eindrehen von Schrauben (12, 12') in eine Werkstückoberfläche mit einem automatischen Schraubwerkzeug (13, 13') und einem Schraubenmagazin (11, 11'), in dem die Schrauben (12, 12') an einem Träger (14, 14') parallel zueinander aufgereiht bevorratet sind, **dadurch gekennzeichnet, dass** sie eine Schraubenvereinzelungsvorrichtung (16, 16') aufweist, mit der einzelne Schrauben (12, 12') vom Träger (14, 14') abtrennbar und über eine Schraubenzuführvorrichtung (17, 17') dem Schraubwerkzeug (13, 13') einzeln zuführbar sind, sodass das Schraubwerkzeug (13, 13') die Schrauben (12, 12') nacheinander in die Werkstückoberfläche an dafür vorgesehenen Stellen mit einem definierten Hub eindrehen kann.

2. Schraubvorrichtung nach Anspruch 1, **dadurch gekennzeichnet, dass** mit der Schraubenzuführvorrichtung (17, 17') die vereinzelten Schrauben (12, 12') mit der Spitze auf der Werkstückoberfläche aufsetzbar sind, bevor das Schraubwerkzeug (13, 13') am Kopf der Schraube (12, 12') eingreift und die Schraube (12, 12') eindreht.

3. Schraubvorrichtung nach Anspruch 1 oder 2, **dadurch gekennzeichnet, dass** die Schraubenzuführvorrichtung (17, 17') ein Schlauch oder ein Rohr ist.

4. Schraubvorrichtung nach Anspruch 3, **dadurch gekennzeichnet, dass** die Schrauben (12, 12') mittels Druckluft durch den Schlauch oder das Rohr bewegbar sind.

5. Schraubvorrichtung nach einem der vorhergehenden Ansprüche,
**dadurch gekennzeichnet, dass** das Schraubenvereinzelungswerkzeug (16, 16') einen Stift (16.1) aufweist, der durch Krafteinwirkung auf den Schraubenkopf in Schraubenlängsrichtung die Schrauben (12, 12') nacheinander vom Träger (14, 14') löst.

6. Schraubvorrichtung nach einem der vorhergehenden Ansprüche,
**dadurch gekennzeichnet, dass** eine Vorschubeinrichtung (15, 15') für den Träger (14, 14') vorgesehen ist, mit dem dieser getaktet jeweils um den gegenseitigen Abstand der Schrauben (12, 12') am Träger (12, 12') vorwärtsbewegbar ist, um die jeweils nächste Schraube (12, 12') in der Schraubenvereinzelungsvorrichtung (16, 16') zu platzieren.

7. Schraubvorrichtung nach einem der vorhergehenden Ansprüche,
**dadurch gekennzeichnet, dass** der Träger (14, 14') ein streifenförmiger Träger (14, 14'), vorzugsweise ein Papierstreifen, ist, an dem die Schrauben (12, 12') angeklebt sind.

8. Schraubvorrichtung nach Anspruch 7, **dadurch gekennzeichnet, dass** der streifenförmige Träger (14, 14') im Schraubenmagazin (11, 11') zickzackförmig oder spiralförmig aufgewickelt ist.

9. Schraubvorrichtung nach einem der vorhergehenden Ansprüche,
**dadurch gekennzeichnet, dass** das Schraubenmagazin (11, 11') austauschbar angeordnet ist.

10. Schraubvorrichtung nach Anspruch 9, **dadurch gekennzeichnet, dass** sie nach Leerung eines Schraubenmagazins (11, 11') automatisch ein neues Schraubenmagazin (11, 11') lädt.
